# EUROPEAN PATENT APPLICATION

(11) **EP 4 729 637 A1**
(43) Date of publication of application: **22.04.2026**
(21) Application number: 25152761.0
(22) Date of filing: 20.01.2025
(51) Int. Cl.: C21C 5/52, C21C 5/56, C21C 7/072, C21C 7/10, C22B 9/00

(54) **A SYSTEM AND A METHOD FOR PRODUCING GREEN STEEL WITH NEAR ZERO GHG EMISSIONS INTENSITY**

(30) Priority: 17.10.2024 IN 202421079071
(71) Applicant: Saarloha Advanced Materials Private Limited, Pune, Maharashtra 411036 (IN)
(72) Inventor: KALYANI, Amit Babasaheb, 411036 Pune (IN); GOYAL, Ravindra Kumar, 411036 Pune (IN); PURANIK, Abhiram Janardan, 411036 Pune (IN); BHARAMBE, Chandan Jagannath, 411036 Pune (IN); UMATE, Nivrutti Dattatray, 411036 Pune (IN)
(74) Representative: Gislon, Gabriele

(57) **Abstract**

The present invention relates to a method (150) and a system (200) for producing green steel (600). The method (150) includes the scrap (201) which is obtained from one or more sources of scrap (700). The obtained scrap and ferroalloys are charged into an induction furnace (203) and melted (103) in an inert environment to obtain molten steel (204). The inert gases (205) are introduced into the induction furnace (203) to prevent oxidation of the scrap (201) and different types of scrap alloys (202) and ferroalloys during melting. The molten steel (204) is transferred from the induction furnace (203) either directly to a casting area (206) or to a refining unit (204-1) to refine the molten steel (204). The refined steel transferred to a vacuum-degassing unit (204-2) to degas the refined steel. Finally, the vacuum-degassed steel is transferred to a casting area (206) to produce the green steel (600).

## Description

### TECHNICAL FIELD

The embodiments of the present invention generally relate to the field of metallurgy. More particularly, the present invention relates to a system and a method for producing green steel. It may be appreciated that the term "green steel" throughout the description refers to steel produced using environmentally friendly and sustainable methods with near zero GHG emissions per ton of steel. This usually involves using renewable energy sources, usage of recycled scrap & other environmentally friendly greener raw materials & fuels, reducing carbon dioxide emissions, and minimizing and recycling waste during the production process.

### BACKGROUND

Background description includes information that may be useful in understanding the present invention. It is not an admission that any information provided herein is prior art or relevant to the presently claimed invention, or that any publication specifically or implicitly referenced is prior art.

Steel is the foundation of today's global economy and plays a vital role in driving a nation's growth. Currently, the world's second-largest steel producer, India aims to reach a steel production capacity of 300 million tons by 2030. However, the steel industry contributes approximately 7-9% of global greenhouse gas (GHG) emissions, making it the fifth-largest polluting industry worldwide, while in India, it accounts for about 12% of emissions. Therefore, decarbonizing this industry and producing Green Steel is an urgent necessity.

The traditional steelmaking process is known for being one of the most emission-intensive industrial activities. These processes include steel production through the Blast Furnace (BF) - Basic Oxygen Furnace (BOF)/Energy Optimizing Furnace (EOF) route, the Electric Arc Furnace (EAF) route, and the Induction Furnace (IF) route. In the BF-BOF/EOF route, steel is produced from iron ore, whereas the EAF route uses either 100% scrap or a mix of scrap with direct reduced iron (DRI) or pig iron. The total greenhouse gas (GHG) emissions vary based on the input raw materials used for melting.

In recent years, several steel production methods have been developed, focusing on different steelmaking technologies. Some of these methods are discussed below:

U.S. Patent 3,955,964 (May 11, 1976) describes a method for producing steel in an electric arc furnace using a molten charge made from high-carbon ferrous metal containing less than 3% carbon, 0.2% silicon, and 0.2% manganese, heated to at least 1375°C. A solid metallic charge, including scrap steel, hot briquetted iron, direct reduced iron, and iron ore, is added to form a charge mixture. The molten steel is then superheated, finished, and tapped into a ladle for casting while maintaining chemical composition and purity.

U.S. Patent 6,162,274 (Dec 19, 2000) outlines a two-step steel production method in submerged electric arc furnaces, beginning with charging reduced iron pellets to produce hot metal, which is then used to efficiently melt a second portion of pellets, leading to steel production. The process emphasizes maintaining a specific weight ratio (30-70%) of the first and second pellet portions to optimize melting and ensure high-quality steel output.

U.S. Patent 9,045,810 B2 (Jun 02, 2015) describes a method for melting steel in an electric arc furnace using a "hot heel," a mass of molten metal retained from previous operations. The hot heel helps maintain the necessary temperature to melt new scrap metal, optimizing the process and potentially reducing energy consumption. The method specifies that the hot heel must be at least 0.75 times the ratio of heat required to melt the scrap to the heat available from the hot heel.

CN 104,962,800 B (Jan 25, 2017) relates to a smelting method for stainless steel, which involves electric arc furnace (EAF) smelting, primary smelting in a low-frequency (LF) furnace, vacuum oxygen decarburization (VOD) furnace smelting, and LF furnace re-smelting. This method improves molten steel quality, reduces production costs, and addresses the challenge of smelting various molten steel types in a single EAF.

CN 102,787,195 B (Oct 16, 2013) describes a stainless-steel smelting method using an ultrahigh-power electric arc furnace with an eccentric bottom for direct iron reduction, a large-flow furnace wall cluster coal oxidation gun, and refining through AOD and VOD furnaces before continuous casting.

The above-recited literatures focus on traditional steelmaking methods, which are associated with higher GHG emissions than the new processes proposed. The proposed method aims to specifically address the reduction of GHG emissions, which remain unaddressed in the conventional routes.

Another prior-art reference US 12,065,749 B2 (Aug 20, 2024) discloses process for making green steel involves converting iron ore into "green iron". The iron is melted using electric systems, possibly mixed with alloying materials to create different steel grades. The molten steel is formed into products through casting, molding, or similar methods. However, the process mentioned is meant for producing iron through electrochemical cell reaction. This reference uses use of Hydrogen for production of green steel.

Yet another prior-art reference US 6,508,853 B2 (Jan 21, 2003) discloses producing iron melt (the steel grade production) through Electric arc furnace and subsequently through oxygen blowing converter which increases the GHG emissions. The process involves two key steps. First, non-magnetite iron oxides in the ore are thermally reduced to form magnetite using a reductant. Then, the reduced ore is dissolved in acid to create an acidic iron-salt solution. This solution includes protons generated in an electrochemical cell, aiding the dissolution process. This reference produces iron through electrochemical cell reaction. It discloses the reducing gas containing H2 or other gases which can also be CO (Carbon monoxide) hence the GHG emissions will be higher.

Above mentioned prior arts either ignore the GHG emissions during steel making or the methods described are not suitable for mass scale production of green steel.

In the IF route, steelmakers rely on energy produced from non-renewable sources, and GHG emissions from the steelmaking process are not captured but released into the environment. In addition to GHG emissions from steel production and power generation, transportation of raw materials via road or rail also contributes significantly to overall emissions.

Thus, there exists a dire need for an efficient, and environmentally friendly method and system for producing green steel that maximizes the use of recycled scrap materials, reduces emissions, and ensures high-quality steel output through controlled melting processes. More specifically, there exists a dire need to provide a method and a system to minimize the GHG emissions that occur during the entire process chain of steelmaking.

### SUMMARY

Within the scope of this application, it is expressly envisaged that the various aspects, embodiments, examples, and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

To overcome the aforementioned challenges, the present invention provides a system and a method to minimize the GHG emissions occurring during the entire process chain of steelmaking. The system and the method are capable of producing near zero emission steel (green steel) in an environmentally friendly way through the induction furnace (IF) route. The system and the method aim to reduce GHG emissions during the steel manufacturing process.

In an aspect, to address all sources of emissions, the present invention provides a system and method to reduce GHG emissions across the following scopes: Scope 1 (direct emissions), Scope 2 (indirect emissions from electricity generation), and Scope 3 (indirect emissions from raw material production, transportation, etc.).

Scope 1 emission reduction: The raw material used for steel production via the Induction Furnace (IF) route is approximately 100% scrap, generated from hot deformation, steel casting, forging, grinding, machining, and other processes. The scrap is sourced from areas near the manufacturing site. To minimize the use of virgin ferroalloys, scrap is carefully selected to match the required chemical composition for the finished steel product. The inert environment inside the induction furnace crucible further reduces GHG emissions to near-zero levels.

Scope 2 emission reduction: Entire steelmaking process is powered by electricity generated from renewable energy sources, further reducing indirect emissions.

Scope 3 emission reduction: The raw material (scrap) is sourced from the vicinity of any factory facilities and transported to the melting site using electric vehicles such as forklifts and trucks. Usage of Bio-fuels instead of Fossil fuels helps in reducing the GHG emissions.

Additionally, the end-of-life manufacturing scrap (i.e., the materials and substances that are no longer useful after a product has reached the end of its life) has zero GHG emissions, in accordance with ISO 14404-2:2013 (an international standard that provides a method for calculating the carbon dioxide (CO2) emission intensity of steel production in plants that use electric arc furnaces (EAFs)). ISO 14404-2:2013 outlines the calculation method for carbon dioxide emission intensity in steel production using electric arc furnaces (EAF).

Accordingly, to minimize Scope 1 emissions, scrap is used as the primary raw material, and an inert gas environment is introduced, bringing GHG emissions down to nearly zero. The scrap is selected so as to match the required chemical composition of the final steel product. To reduce Scope 2 emissions, solar power is used as a renewable energy source for electricity generation. To address Scope 3 emissions, scrap is sourced from nearby locations and transported to the melting facility using electric vehicles, Bio-diesel is used as source of fuel instead of fossil fuels such as Furnace oil and/or PNG.

As a result, the present invention significantly reduces GHG emissions throughout the entire steelmaking process.

In this aspect, the system and method are capable of producing all types of steels including low carbon, medium carbon, high carbon, HSLA, low alloy steel, high alloy steel, stainless steel, FE-based super alloy and tool and die steel, and valve steel.

The method as disclosed in the present invention provides several key features aimed at minimizing GHG emissions during the steelmaking process:
Scrap transport via electric vehicles: The scrap used for melting is transported using electric vehicles (for example- forklifts), thereby reduces GHG emissions to near zero.
Scrap charging: Scrap is loaded into the induction furnace using a crane powered by renewable energy, contributing to emission reduction during the charging process.
Induction furnace melting: The induction furnace, which melts Scrap & various alloys, operates on electricity generated from renewable energy sources, further reducing carbon emissions.
Liquid steel transfer from Induction furnace: After the steel is melted and its chemistry is adjusted, the liquid metal is either transferred to the casting area or Ladle furnace for refining and degassing using cranes, with no carbon emissions at this stage.
Inert gas environment: Inert gas (for example: Argon gas) is used to create an inert environment in the Induction furnace, maximizing the recovery of scrap and ferroalloys while minimizing elemental losses.
Renewable energy source: The entire process, including scrap melting and equipment operation, is powered by solar energy generated from a captive plant, significantly reducing emissions.
Minimal ferroalloy addition: Maximum 1% of total ferroalloys or pure metals are added as per requirement of chemistry adjustment, with minimum 99% of the input being scrap.
Near-Zero Emissions: By integrating these innovations, the process achieves minimal emissions, with a near-zero CO2 emission level of approximately 0.030 tons of CO2e per metric ton of crude steel.

Various objects, features, aspects, and advantages of the inventive subject matter will become more apparent from the following detailed description of preferred embodiments, along with the accompanying drawing figures in which like numerals represent like components.

### BRIEF DESCRIPTION OF DRAWINGS

The accompanying drawings, which are incorporated herein, and constitute a part of this invention, illustrate exemplary embodiments of the disclosed methods and systems in which reference numerals refer to the same parts throughout the different drawings. Components in the drawings are not necessarily to scale, emphasis instead being placed upon clearly illustrating the principles of the present invention. Some drawings may indicate the components using block diagrams and may not represent the internal circuitry of each component. It will be appreciated by those skilled in the art that the invention of such drawings includes the invention of electrical components, electronic components or circuitry commonly used to implement such components.
FIG. 1 illustrates an exemplary flow diagram that describes the step-wise illustration of the method for producing green steel, in accordance with an embodiment of the present invention.
FIG. 2 illustrates an exemplary system block diagram of a system for producing green steel, in accordance with an exemplary embodiment of the present invention.
FIG. 3 illustrates an exemplary representation of a flow chart showing the overall process of producing green steel, in accordance with an embodiment of the present invention.
FIG. 4 illustrates an exemplary representation of an induction furnace with an inert environment, in accordance with an embodiment of the present invention.

Other objects, advantages, and novel features of the invention will become apparent from the following more detailed description of the present embodiment when taken in conjunction with the accompanying drawings.

### DETAILED DESCRIPTION

Various example embodiments will now be described more fully with reference to the accompanying drawings in which only some example embodiments are shown. Specific structural and functional details disclosed herein are merely representative for purposes of describing example embodiments. The present invention, however, may be embodied in many alternate forms and should not be construed as limited to only the example embodiments set forth herein.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the spirit and scope of the present invention as defined by the appended claims.

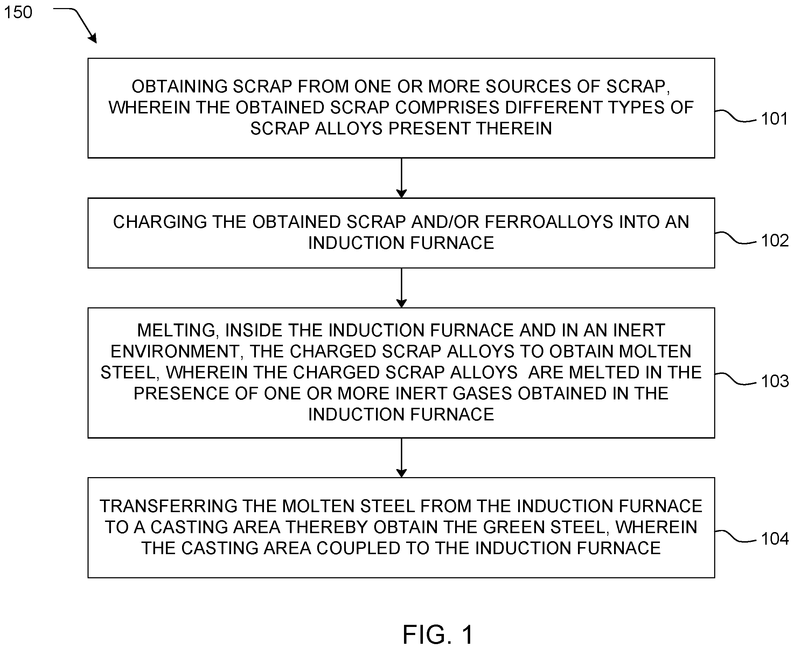

Hereinafter, exemplary embodiments of the present invention will be described with reference to the accompanying drawings FIGs. 1-4.

The present invention provides a method and a system customised for producing green steel with near zero GHG emissions per ton of steel.

FIG. 1 illustrates an exemplary flow diagram (150) that describes the step-wise illustration of the method (150) for producing green steel (600), in accordance with an embodiment of the present invention.

As shown inf FIG. 1, the method (150) begins with obtaining scrap from various sources at step 101, which could include industrial waste, end-of-life products, or manufacturing by-products. This scrap may contain different alloys, which need to be sorted based on their chemical composition.

At step 102, the obtained scrap is charged into an induction furnace, either by using cranes, hoists, buckets, or vibrating feeders. The scrap is melted using renewable energy sources (like solar power). This initial step prepares the raw materials for melting and further processing. It may be noted that before charging, the obtained scrap may be segregated to obtain the metal content therefrom based on their chemical composition.

In the exemplary implementation of the embodiment, the term 'different types of scrap and ferroalloys may refer to carbon steel scrap, stainless steel scrap, tool steel scrap, alloy steel scrap, high-strength low-alloy (HSLA) steel scrap, cast iron scrap, Fe-based superalloy scrap or any other type of scrap may be useful for obtaining metal content therefrom. Ferroalloys may refer to ferrous alloy of respective metal such as silicon, manganese, chromium, titanium, vanadium, aluminum, molybdenum, tungsten, nickel, boron, etc.

In the exemplary implementation of the embodiment, the segregation of scrap to obtain the metal content may involve several steps that ensure proper separation of different types of scrap alloys based on their chemical composition and physical properties. The segregating methods include but not limited to, initial sorting manually or using machinery, magnetic separation using a magnet, density-based separation, chemical or spectrometric analysis, manual inspection, and final sorting, shredding or granulation.

In the exemplary implementation of the embodiment, the different types of scraps and ferroalloys are selected based on their chemical composition, various factors and methods can be used to choose the appropriate scrap materials. The different types of scraps and ferroalloys are selected.

In the exemplary implementation of the embodiment, the charging of the scraps and ferroalloys may be performed using one or more charging mechanisms, such as a crane, hoist, charging bucket, or vibrating feeders. The charging mechanisms allow the efficient and safe loading of the scraps and ferroalloys into the induction furnace.

At step 103, the scrap is melted inside the induction furnace. This furnace operates in an inert gas environment, meaning gases like argon (Ar), or other inert gases (He, Ne, Xe, Kr) are supplied through a gas inlet in the furnace. These inert gases (hereinafter the terms `one or more inert gases' or 'inert gases' used interchangeably) prevent oxidation during the melting process, ensuring the purity of the molten steel. The inert gas atmosphere is critical for preventing contamination and reducing the likelihood of unwanted chemical reactions during melting. The choice of gas may depend on the specific alloys being melted.

At step 104, once the melting is complete, the molten steel is transferred to a casting area. This could involve coupling of the furnace to the casting section, ensuring a seamless transfer of the molten steel. At this stage, the molten steel can be formed into the desired shapes. The casting area contains molds to shape the molten steel, and a cooling system helps solidify the steel into ingots or continuous castings. This step finalizes the steel production process.

The casting area may further include a cooling system that facilitates the solidification of the molten metal, and ensures that the green steel achieves the required physical and mechanical properties. The system may also utilize cooling media such as water, air, or inert gases to control the cooling rate of the cast green steel.

At step 105, in cases where high purity engineering quality steel is required to be produced, after melting, the molten steel is sent to a refining unit where additional purification takes place. This is to adjust the final chemical composition of the steel, ensuring that it meets required quality as per specifications.

Following refining, the molten steel undergoes vacuum degassing to remove dissolved gases like hydrogen, nitrogen, or oxygen. This step ensures high-quality steel by preventing gas porosity in the final product, and improvement in overall soundness of steel.

The refined steel is degassed using vacuum-degassing unit (204-2) in step 106. The refinement is done through a refining unit (204-1). The refining unit (204-1) refers to any equipment or system used for refining molten steel. In the refining unit (204-1), additional ferroalloys are introduced into the molten steel to achieve the desired chemical composition. The process is known as the trimming addition of ferroalloys. The additional ferroalloys may include but not limited to elements such as manganese, chromium, nickel, or molybdenum, which enhance the properties of the steel based on the required end application, whether for strength, hardness, or corrosion resistance. For example, if high-strength low-alloy steel is required, specific quantities of ferroalloys are added to obtain the correct alloying elements.

Furthermore, after the refining process of the molten steel through the refining unit, the refined steel undergoes vacuum degassing in step 106. The purpose of vacuum degassing is to remove dissolved gases, particularly hydrogen, nitrogen, and oxygen, from the refined steel. The gases, if not eliminated, can cause defects in the final steel product, such as porosity or hydrogen embrittlement.

During vacuum degassing, the refined steel is subjected to a vacuum environment, where the pressure is significantly reduced. Under low pressure, the dissolved gases in the refined steel are released and removed through a vacuum pump. The removal of gases is crucial for improving the steel's mechanical properties, such as its toughness and fatigue resistance.

In an exemplary implementation of the embodiment, the refining unit may include but not limited to, ladle furnace, RH (Ruhrstahl Heraeus) degassing.

Once vacuum degassing is completed, the vacuum-degassed steel is ready for casting, where it can either be cast into ingots casting or undergo continuous casting. The combination of ladle furnace i.e., refining unit for refining and vacuum-degassing unit ensures the quality and integrity of the green steel produced using the disclosed method.

In an exemplary implementation of the embodiment, the green steel (600) is produced through the described method may include various types of steel, including low carbon, medium carbon, high carbon, high-strength low-alloy (HSLA), low alloy steel, high alloy steel, stainless steel, Fe-based super alloys, tool steel, die steel, and valve steel. The selection of the type of green steel is dependent on the specific composition of the scrap and ferroalloys used in the induction furnace.

The resulting green steel can be available in a range of types, such as low-carbon, medium-carbon, high-carbon steel, stainless steel, or even Fe-based superalloys.

During the melting process, ferroalloys may be added to fine-tune the chemistry of the steel. These adjustments ensure that the molten steel meets the desired mechanical and chemical properties.

It may be appreciated that, the process is designed to be energy-efficient, utilizing renewable energy sources like solar or wind power to power entire steelmaking process. This contributes to the overall goal of producing green steel with near-zero greenhouse gas (GHG) emissions.

It may be appreciated that, the scrap transportation using electric vehicles further reduces the carbon footprint of the process, supporting the sustainability goals of green steel production.

It may be appreciated that, the molten steel is cast into various shapes, with molds in the casting area designed for specific products. The cooling system ensures rapid solidification, improving the quality of the final product and making it ready for subsequent processing or fabrication.

It may be further appreciated that, the entire method is structured to minimize the environmental impact by using recycled materials (scrap) and renewable energy, and avoiding the release of harmful gases during production. The use of inert gases and vacuum degassing helps maintain the quality of steel without relying on traditional high-emission processes.

Thus, the method/process as shown in FIG. 1 provides a green steel production technique by focusing on energy efficiency, emission reduction, and recycling, while maintaining the flexibility to produce various steel types for different industrial applications.

The method further includes refinement of the molten steel (204) before transferring the molten steel (204) into the casting area (206).

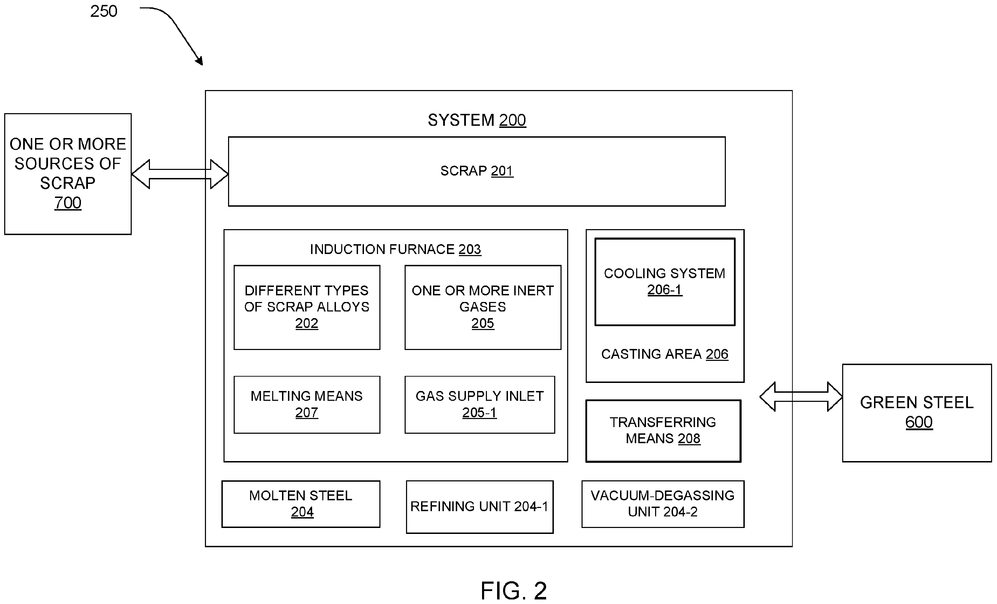

FIG. 2 illustrates an exemplary system block diagram (250) of a system (200) for producing green steel (600), in accordance with an exemplary embodiment of the present invention.

In a second embodiment of the present invention, the system (200) for producing green steel (600) using scraps and ferroalloys (202) and an induction furnace (203) is disclosed. The system (200) is implemented to melt and process scrap (201) into molten steel (204) under controlled inert environment, followed by transferring the molten steel (204) to a casting area (206) for shaping and solidification.

The system (200) further includes a refining unit (204-1) and a vacuum-degassing unit (204-2), both are used for refining and preparing the molten steel (204) for casting. The refining unit (204-1) is adapted to receive the molten steel (204) after initial production in the induction furnace (203). The refining unit (204-1) allows for further metallurgical refinement of the molten steel (204) by adjusting its chemical composition and removing any undesirable impurities. The refining process may include the addition of ferroalloys to adjust the composition, the removal of non-metallic inclusions, or the control of temperature. The refining unit (204-1) is coupled to the induction furnace (203), ensures a flow of molten steel between the two stages of the production process.

Further, once the refining process is done, the refined steel is transferred to the vacuum-degassing unit (204-2). The vacuum-degassing unit (204-2) is used to remove dissolved gases, such as hydrogen, nitrogen, and oxygen, from the refined steel for further refinement. The degassing process occurs under a vacuum environment, significantly reducing the gas content in the refined steel and improves quality of the refined steel. The vacuum-degassed steel is then transferred to the casting area (206) for further processing. The vacuum-degassing unit (204-2) is coupled to both the refining unit (204-1) and the casting area (206), ensures an uninterrupted flow of steel through the different stages of production of the green steel (600).

In the exemplary implementation of the second embodiment, the system (200) includes the induction furnace (203) that is adapted to charge the different types of scrap and ferroalloys (202). The scrap alloys (202) are obtained from scrap (201), which may originate from various sources (700), including industrial processes, manufacturing, construction, or end-of-life products. The scrap (201) may include metal waste that is recyclable, contributing to the sustainability and environmental responsibility of the system (200).

In the exemplary implementation of the second embodiment, the one or more sources of scrap (700) refer to various origins or supply points from which the scrap (201) is collected for use in the disclosed system (200). The sources of scrap provide the raw material for the process of producing green steel (600). The one or more sources of scrap (700) include but not limited to, industrial Processes such as offcuts, shavings, defective parts, forging scraps and other leftover materials from industrial production lines, construction, and demolition such as steel beams, pipes, rebar, and other metallic components, end-of-life products such as old vehicles, household appliances, electronic devices, or machinery, scrap yards or recycling centers, metalworking Facilities, shipbreaking Yards, or municipal waste collection such as discarded metal items from residential or commercial waste, including old furniture, metal containers, or fixtures.

In the exemplary implementation of the second embodiment, once the scrap (201) is obtained, it is segregated to extract the metal content. The segregated metal is then charged into the induction furnace (203). The induction furnace (203) is configured to melt the charged scraps and ferroalloys (202) in an inert environment to prevent oxidation during the melting process.

In the exemplary implementation of the second embodiment, a melting means (207) is provided within the induction furnace (203) to melt the different types of scraps and ferroalloys (202) and convert them into molten steel (204). The melting means (207) are selected from any of induction coils, power supply, temperature sensors and control systems, or furnace lining. The melting means (207) ensures efficient melting of the scraps and ferroalloys (202) in an induction furnace (203).

In the exemplary implementation of the second embodiment, one or more inert gases (205) are introduced into the induction furnace (203) to create an inert environment during the melting process. The inert gases (205) are introduced through a gas supply inlet (205-1) that is in fluid connection with the induction furnace (203). One or more inert gases (205) may include but not limited to, argon (Ar), helium (He), neon (Ne), xenon (Xe), or krypton (Kr). The selection of these inert gases (205) ensures that the molten steel (204) does not oxidize or degrade in quality during the melting process. The flow of inert gases (205) is carefully controlled based on the type of scrap and ferroalloys (202) and the desired characteristics of the molten steel (204).

In the exemplary implementation of the second embodiment, the scrap and ferroalloys (202) have been fully melted and converted into molten steel (204). The system (200) further includes a transferring means (208) to transfer the molten steel (204) from the induction furnace (203) to a casting area (206). The transferring means (208) may include but not be limited to, ladle or ladle car, tapping system, conveyor or track system, tilting mechanism, or pouring mechanism. The transferring means (208) ensures safe and controlled transfer of the molten steel (204) from the induction furnace (203) to the casting area (206) for producing green steel (600).

In the exemplary implementation of the second embodiment, the casting area (206) is coupled to the induction furnace (203) and serves as the section where the molten steel (204) is shaped and solidified into the desired form of green steel (600). The casting area (206) is equipped with molds that facilitate the formation of the molten steel (204) into various shapes. Additionally, the casting area (206) may include a cooling system (206-1) which helps to accelerate the solidification process, ensuring that the molten steel (204) solidifies into high-quality green steel (600).

In the exemplary implementation of the second embodiment, the green steel (600) produced by the system (200) can include various types of steel, such as low carbon, medium carbon, high carbon, high-strength low-alloy (HSLA) steel, low alloy steel, high alloy steel, stainless steel, Fe-based super alloys, tool steel, die steel, and valve steel. The flexibility of the system (200) allows for the production of different types of green steel (600) depending on the scrap and ferroalloys (202) charged into the induction furnace (203).

In the exemplary implementation of the second embodiment, the system (200) is implemented using electricity generated from renewable energy sources to power entire steelmaking process system (200). Renewable energy sources, such as solar, wind, or hydropower, can be used to reduce the environmental impact of the system (200).

To summarise, the system (200) provides a sustainable and efficient solution for recycling scraps (202) and converting it into high-quality steel products. The process is environmentally responsible, and the inclusion of inert gases (205) ensures the purity and quality of the molten steel (204) throughout the production process in two ways. The first way produces green steel by coupling the induction furnace (203) with a dedicated casting area (206) and cooling system (206-1), the system (200) enables a seamless and controlled process for producing green steel (600) in various forms and compositions. Another way to produce the green steel by coupling Induction furnace (203) to refining unit (204-1) and vacuum degassing (204-2), and finally to casting area (206) and cooling system (206-1).

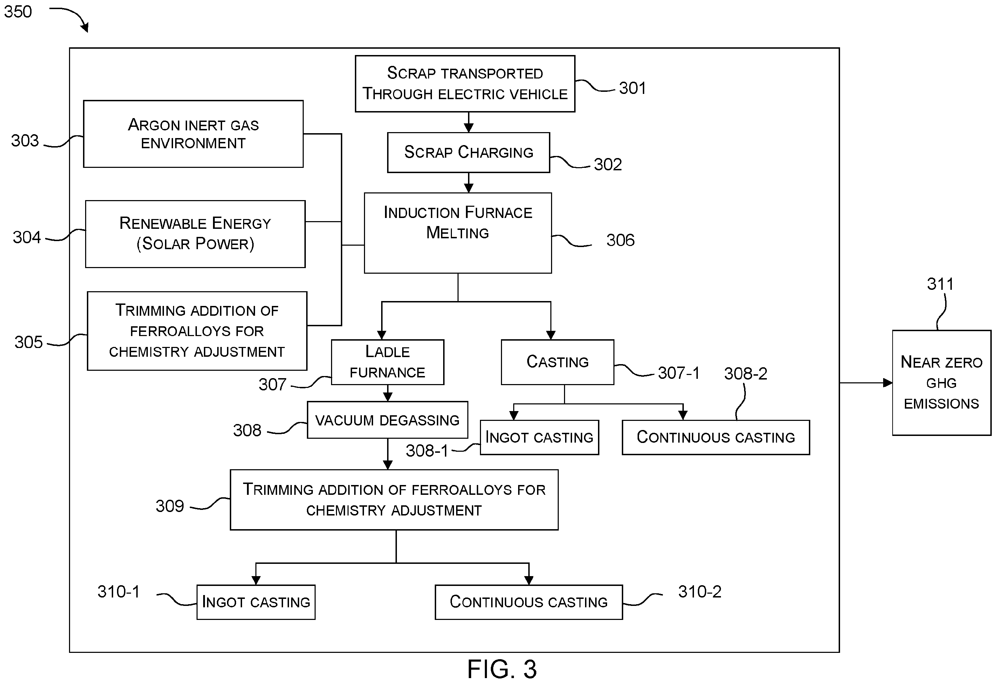

FIG. 3 illustrates an exemplary representation of a flow chart (350) showing the overall process of producing green steel (600), in accordance with an embodiment of the present invention. A green steel production process aimed at achieving near-zero greenhouse gas (GHG) emissions is disclosed. It begins with scrap metal transportation via electric vehicles, followed by scrap charging into an induction furnace powered by renewable energy (solar power). The melting occurs in an argon-inert gas environment to minimize oxidation. Adjustments to the chemical composition are made using ferroalloy additions. The melted steel then passes through a ladle furnace and vacuum degassing to remove impurities. The final product is formed through either ingot or continuous casting, maintaining near zero GHG emissions.

In an exemplary embodiment, each step in the green steel production process from the FIG. 3 is briefly elaborated below:
Scrap Transported through electric vehicle (301): Scrap metal is moved to the plant using electric vehicles, minimizing emissions from transportation by avoiding fossil fuels.
Scrap charging (302): The collected scrap metal is loaded into the induction furnace for charging. The charging process prepares the metal for recycling into steel.
Induction furnace melting (306): The scrap metal is melted in an induction furnace, powered by renewable energy (solar power). The use of solar energy ensures that the process is carbon-neutral.
Argon Inert Gas Environment (303): The melting process is conducted in an argon inert gas atmosphere. Argon prevents oxidation of the metal, maintaining its purity and avoiding unwanted chemical reactions.
Trimming Addition of Ferroalloys for Chemistry Adjustment (305): Ferroalloys are added to the molten metal to adjust the chemical composition, ensuring the steel meets required quality standards for various applications. This step allows for precise control over the properties of the final product.
Ladle Furnace (307): After melting, the molten steel is transferred to a ladle furnace, where further refining and temperature control are carried out. This helps in maintaining the desired steel quality and removing impurities.
Vacuum Degassing (308): The molten refined steel undergoes vacuum degassing to remove dissolved gases like hydrogen, oxygen, and nitrogen. This step improves the steel's quality by preventing gas-related defects, such as bubbles or cracks.
Trimming Addition of Ferroalloys for Chemistry Adjustment (309): After vacuum degassing the molten refined steel again undergoes for the process of the trimming addition of ferroalloys for chemistry adjustment.
Ingot Casting (310-1) or Continuous Casting (310-2): The molten steel is then shaped into solid forms through one of two methods:
Ingot Casting (310-1): Steel is poured into molds to form ingots, which are later processed into various shapes.
Continuous Casting (310-2): The molten steel is continuously poured into a casting machine, forming long sheets or billets that are cut to size.
Near Zero GHG Emissions (311): By using renewable energy sources, electric vehicles, usage of recycled scrap, bio-fuels and advanced melting and refining processes, the overall emissions of greenhouse gases are kept near zero, making this a sustainable process for steel production.

In these embodiments, the green steel production process involves the step of casting (307-1) immediately after the indication furnace melting (step 306) step. Further, molten steel goes into the casting area for either ingot casting (308-1) or continuous casting (308-2) process.

The method significantly reduces the carbon footprint of traditional steel manufacturing while maintaining high-quality steel production.

Referring to FIG. 3, a process for producing green steel (600) using an induction furnace summarized below.

At step 301, the scrap (which may be obtained from various sources like industrial waste or end-of-life products) is transported to the production facility using electric vehicles. The electric vehicle is used to reduce carbon emissions compared to traditional transportation methods reliant on fossil fuels. At step 302, the obtained scrap is charged. At step 306, the melting process takes place in the induction furnace (203), an inert environment is created by introducing argon gas at step 303. Argon helps to prevent oxidation of the scrap during melting, which improves the quality of the steel produced and reduces harmful emissions. At step (304), the electricity required for the induction furnace is provided by renewable energy sources, (for example - solar power). This significantly reduces the carbon footprint of the steelmaking process, making the production more sustainable. Further, to achieve the desired chemical composition of the green steel, a minimum quantity of ferroalloys is added in step (305). This step ensures that the steel meets the required mechanical properties and specifications without unnecessary additions, thereby optimizing resource use.

Furthermore, at step (306), the scrap (201) is loaded into the furnace (203) for the melting process. In step (306), the scrap (201) is melted in the induction furnace (203) under the argon inert gas environment, using energy supplied by a renewable source (for example- solar power). The use of renewable energy and inert gas further reduces the environmental impact of the process. Further, the positive pressure of argon is maintained which ensure that very minimal GHG emissions are released into the environment after melting. At step 307, The molten steel (204) thus produced is then transferred to ladle furnace i.e. refining unit for refining the molten steel thereby obtain the refined steel. At step 308, after the refining process in the refining unit (204-1), the refined steel undergoes vacuum degassing. At step 308, the slag metal reactions occur in the refining unit (204-1) followed by the vacuum treatment through the vacuum-degassing unit (204-2) that further refines the refined steel as well as controls the level of gases such as oxygen (O), hydrogen (H), and nitrogen (N) to obtain the vacuum-degassed steel. Further, trimming addition of ferroalloys is performed on the refined steel at step 309. The GHG emissions occurs during this process is very minimal near zero GHG emissions at step (311). The refined and degassed steel then taken for either ingot casting or continuous casting process.

In a third embodiment of the present invention, the process further includes another shorten process to obtain the green steel (600) i.e. after melting of charged scrap in the induction furnace (203). The molten steel (204) directly transferred for casting into the casting area (206). The molten steel (204) is either transferred for the ingot casting process (308-1) or continuous casting (308-2) process.

In a fourth embodiment of the present invention, a method (150) to reduce the GHG emissions including scope 1 - direct emissions, scope 2 - indirect emissions due to electricity generation, and scope 3 - indirect emissions due to production of raw materials, transportation, etc.

In an exemplary implementation of the fourth embodiment, scope 1 includes the raw material required to produce the steel through the IF route is Approximately 100% scrap generated during hot deformation, steel casting, forging, grinding and machining, etc. Such scrap is available in the nearby area of the manufacturing location. To reduce and avoid the usage of virgin ferroalloys, scrap is carefully selected to match the chemistry required for the finished steel product. The inert environment is provided inside the induction furnace crucible to aid in minimizing the GHG emissions further to near zero level.

In the exemplary implementation of the fourth embodiment, the method (150) produces electricity through a captive renewable energy power plant. The same energy is being utilized for the melting of steel in the induction furnace.

In the exemplary implementation of the fourth embodiment, the raw material, i.e. scrap, is available in the vicinity of the various companies or residential premises which is transported to the melting facility using electric vehicles. (for example - forklifts or trucks). Further, such end-of-life manufacturing scrap has Zero GHG emissions as per ISO 14404-2:2013 i.e. calculation method of carbon dioxide emission intensity from iron and steel production, and steel plant with electric arc furnace (EAF).

In the exemplary implementation of the fourth embodiment, the required scrap is strategically selected to have lesser to no ferroalloy additions. The induction furnace crucible is covered with a metallic hood to arrest air ingress inside the furnace crucible. Positive pressure of Argon gas is maintained inside the furnace crucible, which first replaces the air present in the furnace and then provides a neutral environment. Air ingress thus prevented at the crucible helps to maintain an oxygen-free environment in the furnace crucible hence the GHG emissions are reduced to near zero.

In the exemplary implementation of the fourthembodiment, the scrap that is used for melting is selected nearer to the alloy chemistry to be made so as to reduce the ferroalloys consumption. Inert gas (such as Argon) environment is maintained throughout the melting and helps to improve the recovery of elements from ferroalloys which further reduces the ferroalloys consumption and GHG emissions due to the melting. Since the positive pressure of argon is maintained using the disclosed method (150) it is ensured that very minimal GHG emissions are released into the environment after melting.

The disclosed method (150) helps to minimize the GHG emissions that occur during the entire process chain of steelmaking.

In the exemplary implementation of the fourth embodiment, it may be appreciated that using the disclosed steel manufacturing method (150) produces all types of steels including low carbon, medium carbon, high carbon, HSLA, low alloy steel, high alloy steel, stainless steel, Fe-based super alloy and Tool and Die steel, Valve steel can be effectively produced. The individual elemental range is specified in the below table 1. The entire range of various chemical compositions of the steel grades that can be produced will be a subset of the elemental range. The below table 1 encompasses all the types of steel and ferrous alloys.

| **Element** | **C** | **Mn** | **Si** | **S** | **P** | **Cr** | **Ni** | **Mo** | **At** | **Ti** |
|---|---|---|---|---|---|---|---|---|---|---|
| **Range (Wt%)** | 0.005 - 1.5 | 0 - 30 | 0 - 5 | 0 - 0.9 | 0 - 0.9 | 0-30 | 0 - 45 | 0 - 15 | 0 - 10 | 0-5 |
| **Element** | **V** | **Nb** | **W** | **Cu** | **Pb** | **Sn** | **Te** | **Ca** | **Co** | **Ta** |
| **Range (Wt%)** | 0-10 | 0 - 10 | 0 - 10 | 0 - 10 | 0 - 0.5 | 0 - 0.5 | 0 - 0.5 | 0 - 0.5 | 0 - 5 | 0-0.1 |
| **Element** | **Sb** | **Ce** | **La** | **Zr** | **Zn** | **O** | **H** | **N** | **As** | **B** |
| **Range (Wt%)** | 0-0.1 | 0 - 0.1 | 0 - 0.1 | 0 - 0.1 | 0 - 0.1 | 0 - 0.05 | 0 - 0.01 | 0 - 1 | 0 - 0.5 | 0-0.5 |

To summarise, the present invention integrates the different concepts to reduce GHG emissions in each scope. For minimizing the scope 1 emissions, scrap has been used as a raw material, and an inert gas environment is provided to further reduce the GHG emissions to a level of near zero. The scrap is selected to match the chemistry of the final finished grade of steel product. To reduce scope 2 emissions, the power is generated using a renewable energy source like solar power. To reduce the scope 3 emissions, scrap is taken from nearby locations and transported through electric vehicles to the melting station.

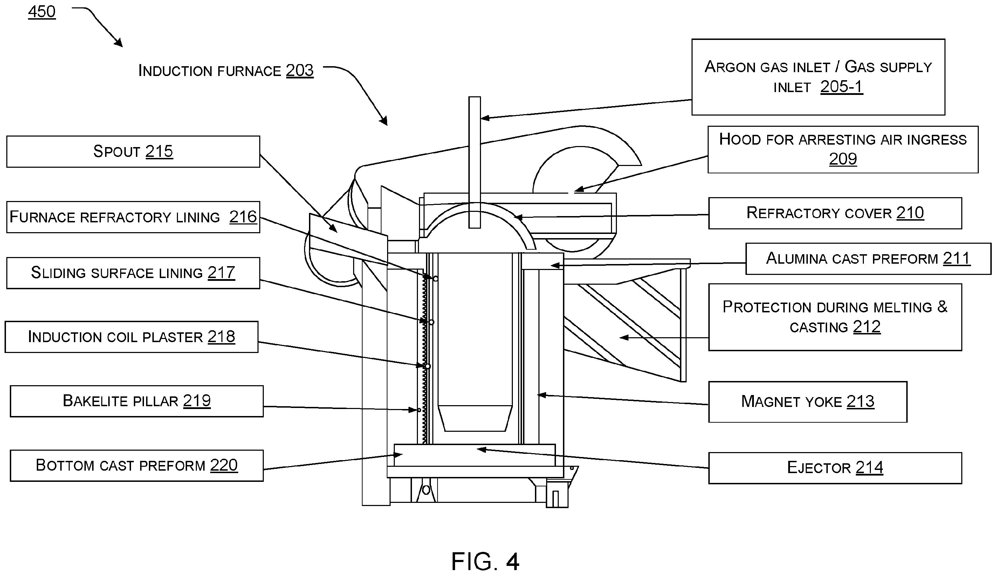

FIG. 4 illustrates an exemplary representation (450) of an induction furnace (203) with an inert environment, in accordance with an embodiment of the present invention. FIG. 4 illustrates the induction furnace (203), its components, and the overall working of the induction furnace (203) for the green steel production method discussed earlier. Here's a component-wise explanation of the system:

Induction Furnace (203): Central to the melting process of scrap in the green steel method, using renewable or non-renewable energy.

Argon Gas Inlet (205-1): Inert gas, such as argon, is injected here to prevent oxidation during the melting process (step 103).

Hood for Arresting Air Ingress (209): Prevents air contamination, maintaining an inert environment.

Furnace Refractory Lining (216): Protects the furnace's inner structure during high-temperature operations.

Spout (215): Likely used for molten steel transfer from the furnace to the casting area (step 104).

Refractory Cover (210): Protects against high heat and corrosion during melting.

Induction Coil Plaster (218): Houses the induction coils, creating electromagnetic fields to heat the scrap.

Magnet Yoke (213): Assists in stabilizing the magnetic field for efficient induction heating.

Protection during Melting and Casting (212): It protects from heat and splashes of liquid metal during casting.

Ejector (214) and Bottom Cast Preform (220): Mechanisms likely aiding in casting operations and transfer of molten metal.

These components work together to perform the various steps (scrap charging, melting, refining, casting) described in the green steel process.

Again referring to FIG. 4, in an exemplary implementation of the fifth embodiment, the induction furnace (203) includes a gas supply inlet (205-1) for one or more inert gases (205), a hood for arresting air ingress (209), refractory cover (210), alumina cast pre-form (211), protectors (212), magnet yoke (213), ejector (214), bottom cast pre-form (220), Bakelite pillar (219), induction coil plaster (218), sliding surface lining (217), refractory lining (216), and spout (215).

In the exemplary implementation of the fifth embodiment, the argon or other inert gases are introduced into the furnace to create a controlled environment through argon Gas Inlet/gas Supply Inlet (205-1) for preventing oxidation during the melting process. The hood (209) prevents external air from entering the induction furnace (203), thereby maintaining the inert environment necessary for optimal steel melting and reducing contamination from unwanted gases like oxygen and nitrogen. The refractory cover (210) protects the furnace components from the intense heat and corrosive effects of the molten metal, prolonging the furnace's lifespan. The alumina cast preform (211) is a heat-resistant material that lines certain parts of the induction furnace (203), providing protection against high temperatures during the melting and casting process. The protectors (for example-used during melting and casting) to the structural elements and protective materials used to safeguard both the furnace and the steel being produced from damage or contamination during melting and casting operations. The magnet yoke (213) is part of the induction furnace (203) that generates the magnetic field necessary for heating the metal. It helps in induction melting process by creating an electromagnetic field that heats the scrap (201). The spout (215) is the outlet through which molten steel (204) is poured from the induction furnace (203) into molds or other processing equipment.

Further, the furnace refractory lining (216) is made from heat-resistant materials that line the interior walls of the furnace (203), protecting the furnace shell from the extreme heat and corrosion caused by the molten metal. The sliding surface lining (217) allows for smooth movement and manipulation of furnace parts during operations, enhancing the overall functionality and reducing wear. The induction coil (218) is encased in plaster to insulate and protect it while ensuring that the electromagnetic field efficiently heats the scrap metal. This also prevents overheating or short circuits. The bakelite pillar (219) provides structural support to the furnace components and is resistant to high temperatures and electrical currents, ensuring safety during the melting process. The bottom cast preform (220) is located at the induction furnace's base, which provides support and shape the molten steel (204) in the bottom.

To illustrate the green steel making process, two examples are given in table 3.

In these embodiments, the process is applied to two more cases of different steel families such as C-Mn steel and Low Alloy Steel. In both cases, 99.8% of the scrap (201) (matching with the aim chemistry) is used (illustrated below table 3)

**Table 3:**

| **Grade** | **Heat No.** | **C %** | **Mn %** | **Si %** | **S %** | **P %** | **Cr %** | **Ni %** | **Mo %** | **Al %** | **N ppm** |
|---|---|---|---|---|---|---|---|---|---|---|---|
| **42CrMo4** | IF-147 | 0.4 | 0.81 | 0.24 | 0.032 | 0.01 | 1.01 | 0.075 | 0.178 | 0.02 | 78 |
| **C38** | IF-156 | 0.388 | 1.44 | 0.65 | 0.021 | 0.013 | 0.29 | 0.078 | 0.056 | 0.011 | 152 |

In these embodiments, below tables 4a and 4b give the exact quantity used for 42CrMo4 and C38 grade steels.

**Table 4a: Ferro alloys required for grade 42CrMo4:**

| **Ferroalloys for 42CrMo4** | |
|---|---|
| **Scrap** | 998.21 (kg) |
| **Ferroalloys** | **Qty (kg/MT)** |
| **FeSi** | 0.18 |
| **FeCr** | 0.818 |
| **FeMn** | 0.607 |
| **FeMo** | 0.151 |
| **Al bar** | 0.022 |
| **CPC** | 0.212 |
| **Quick Lime** | 16.5 |
| **DBM** | 1 |
| **Electrode consumption** | 1.25 |
| **Ar** | 1.9 m3 |
| **N** | 1 m3 |
| **BioDiesel** | 7 m3 |

**Table 4b: Ferro alloys required for grade C38**

| **Ferroalloys for C38** | |
|---|---|
| **Scrap** | 998.13 (kg) |
| **Ferroalloys** | **Qty (kg/MT)** |
| **FeSi** | 0.489 |
| **FeCr** | 0.235 |
| **FeMn** | 1.079 |
| **Al bar** | 0.02 |
| **CPC** | 0.205 |
| **Quick Lime** | 16.5 |
| **DBM** | 1 |
| **Electrode consumption** | 1.25 |
| **Ar** | 1.9 m3 |
| **N** | 1 m3 |
| **Bio Diesel** | 7 m3 |

The GHG emissions that occurred during the processing of above mentioned two examples were observed to be in the range of 0.027 to 0.030 (Ton of CO2/ MT steel of cast) which is very negligible. Hence, the method mentioned in the present invention helps to reduce GHG emissions and can be used for production of various steel grades from different families. It is clear from the above Tables 4a and 4b that using the disclosed system (200) and the method (150) the GHG emissions are reduced to near zero levels.

To summarise, the scrap (201) melting through the induction furnace route has the highest recovery and minimal or near-zero GHG emissions. The Alloys that may be made using the method (150) of the present invention cover all types of ferrous alloys i.e. green steel (600). The power required for melting in the induction furnace (203) and casting of the obtained scrap (201) is generated by renewable energy sources such as solar power. The present invention provides a cost-effective way of producing the green steel (600) where green hydrogen is not required to produce the same.

What are described above are merely preferred embodiments of the present invention, and are not to limit the present invention; any modification, equivalent replacement, and improvement within the principle of the present invention should be included in the protection scope of the present invention.

Since the subject matter of the dependent claims in relation to the prior art on the priority date may form separate and independent inventions, the applicant reserves the right to make them the subject matter of independent claims or divisional declarations. They may furthermore also contain independent inventions that have a configuration that is independent of the subject matters of the preceding dependent claims.

Further, elements and/or features of different example embodiments may be combined with each other and/or substituted for each other within the scope of this invention and appended claims.

### ADVANTAGES OF THE INVENTION:

The proposed invention provides a system and a method for producing green steel.

The proposed invention provides a system and a method that implements advanced charging mechanisms, such as cranes, hoists, charging buckets, for loading scrap alloys into the induction furnace.

The proposed invention provides a system to ensure a seamless transition of molten steel to a casting area equipped with molds and a cooling system.

The proposed invention provides a method and a system that facilitates the recycling of scrap metal from various sources, including industrial waste, construction debris, and end-of-life products, thus contributing to a circular economy model in steel production.

The proposed invention offers a comprehensive solution for producing green steel that incorporates electric vehicles for the collection and transport of scrap metal, further enhancing the sustainability aspect of steel production.

## Claims

1. A method (150) for producing a green steel (600), the method (150) comprising:
obtaining (101) a scrap (201) from one or more sources of scrap (700), wherein the obtained scrap (201) comprises different types of scrap alloys (202) present therein;
charging (102) the obtained different types of scrap alloys (202) into an induction furnace (203);
melting (103), inside the induction furnace (203) and in an inert environment, the charged scrap alloys (202) to obtain molten steel (204), wherein the charged scrap alloys (202) are melted in the presence of one or more inert gases (205) obtained in the induction furnace (203); and
transferring (104) the molten steel (204) from the induction furnace (203) to a casting area (206) coupled to the induction furnace (203) to thereby obtain the green steel (600).

2. The method (150) as claimed in claim 1, wherein the method (150) further comprising:
refining (105), by a refining unit (204-1) coupled to the induction furnace (203), the molten steel (204) before transferring to the casting area (206), wherein the refining unit (204-1) is coupled to the induction furnace (203); and
degassing (106), by a vacuum-degassing unit (204-2) coupled to the induction furnace (203), refining unit (204-1), and the casting area (206), the refined steel to transfer the vacuum-degassed steel to the casting area (206).

3. The method (150) as claimed in claim 1, wherein:
the obtained scrap (201) is segregated to obtain specific metal combination therefrom and thereby charge the obtained metal in the induction furnace (203); and
the one or more inert gases (205) are obtained by inserting a flow of the one or more inert gases (205) in the induction furnace (203) to prevent oxidation of the obtained molten steel (204).

4. The method (150) as claimed in claim 1, wherein:
the green steel (600) is selected from any or a combination of low carbon, medium carbon, high carbon, high-strength low-alloy (HSLA), low alloy steel, high alloy steel, stainless steel, Fe-based super alloy, tool, die steel, or valve steel;
the different types of scrap alloys (202) are selected based on a required chemical composition and chemical composition of obtained scrap.

5. The method (150) as claimed in claim 1, wherein:
the charged scrap alloys are melted using a renewable energy source; and
the obtained different types of scrap alloys (202) are charged using one or more charging mechanisms provided in the induction furnace (203), wherein the one or more charging mechanisms are selected from any of crane, hoist, charging bucket, or vibrating feeders.

6. The method (150) as claimed in claim 1, wherein:
the scrap (201) is obtained using an electric vehicle; and
the one or more inert gases (205) are obtained through a gas supply inlet provided on the induction furnace, wherein the one or more inert gases (205) are selected from any or a combination of argon (Ar), helium (He), neon (Ne), xenon (Xe), or krypton (Kr).

7. The method (150) as claimed in claim 1, wherein:
the scrap (201) is a metal waste generated from industrial processes, manufacturing processes, construction processes, or an end-of-life products; and
the casting area (206) is equipped with one or more molds to form one or more shapes from the molten steel (204), wherein the casting area (206) further comprising a cooling system (206-1) that facilitates the solidification of the molten steel (204).

8. A system (200) to produce a green steel (600), the system (200) comprising:
an induction furnace (203) adapted to charge different types of scrap alloys (202), wherein the different types of scrap alloys (202) are obtained from scrap (201);
a melting means (207) adapted to melt the charged scrap alloys (202) inside the induction furnace (203) and in an inert environment, wherein the charged scrap alloys (202) are melted in the presence of one or more inert gases (205) obtained in induction furnace (203); and
a transferring means (208) adapted to transfer the molten steel (204) from the induction furnace (203) to a casting area (206) coupled to the induction furnace (203) to thereby obtain the green steel (600).

9. The system (200) as claimed in the claim 8, wherein the system (200) further comprising:
a refining unit (204-1) adapted to refine the molten steel (204) before transfer to the casting area (206), wherein the refining unit (204-1) is coupled to the induction furnace (203); and
a vacuum-degassing unit (204-2) adapted to degas the refined steel and transfer the vacuum-degassed steel to the casting area (206), wherein the vacuum-degassing unit (204-2) is coupled to the induction furnace (203), the refining unit (204-1) and the casting area (206).

10. The system (200) as claimed in the claim 8, wherein:
the scrap (201) is generated from one or more sources of scrap (700);
the obtained scrap (201) is segregated to obtain metal therefrom and thereby charge the obtained metal in the induction furnace (203); and
the one or more inert gases (205) are obtained through a gas supply inlet (205-1) provided on the induction furnace (203), wherein the one or more inert gases (205) are selected from any or a combination of argon (Ar), helium (He), neon (Ne), xenon (Xe), or krypton (Kr).
